**Europäisches Patentamt**

**European Patent Office**

**Office européen des brevets**

(19)

(11) Veröffentlichungsnummer : **0 165 546**
**B1**

(12) **EUROPÄISCHE PATENTSCHRIFT**

(45) Veröffentlichungstag der Patentschrift :
13.12.89

(21) Anmeldenummer : 85107224.9

(22) Anmeldetag : 12.06.85

(51) Int. Cl.⁴ : **A 46 B   3/06**, A 46 B   5/00,
A 46 D   1/00// A46B9/04

(54) **Zahnbürste.**

(30) Priorität : 19.06.84 DE 3422623

(43) Veröffentlichungstag der Anmeldung :
27.12.85 Patentblatt 85/52

(45) Bekanntmachung des Hinweises auf die Patenterteilung : 13.12.89 Patentblatt 89/50

(84) Benannte Vertragsstaaten :
AT BE CH DE FR GB IT LI NL SE

(56) Entgegenhaltungen :
EP—A— 0 060 592
CH—A—   637 279
DE—A— 2 847 781
DE—A— 2 849 278
DE—A— 2 849 510
DE—A— 2 937 241
DE—C—   815 034
DE—U— 8 403 491
GB—A— 2 016 917
US—A— 3 910 637

(73) Patentinhaber : **CORONET-WERKE Heinrich Schlerf
GmbH**

**D-6948 Wald-Michelbach/Odw. (DE)**

(72) Erfinder : **Weihrauch, Georg
Am Rossert 1
D-6948 Waldmichelbach-Affolterbach (DE)**

(74) Vertreter : **Dr.-Ing. Hans Lichti Dipl.-Ing. Heiner Lichti
Dipl.-Phys. Dr. Jost Lempert
Postfach 41 07 60 Durlacher Strasse 31
D-7500 Karlsruhe 41 (DE)**

**Beschreibung**

Die Erfindung betrifft eine Zahnbürste mit einem einen Bürstenkopf und einen Griff bildenden Körper aus Kunststoff und am Bürstenkopf durch Schweißen befestigten Borsten aus dem gleichen Kunststoff.

Zahnbürsten haben sich in ihrem konstruktiven Aufbau seit Jahrzehnten kaum verändert. Änderungen haben sich nur im technologischen Bereich ergeben, indem das früher für Bürstenkopf und Griff verwendete Holz sowie die für die Besteckung verwendeten Naturborsten durch Kunststoff ersetzt worden sind. Auch die Fertigungstechnik ist weitgehend unverändert geblieben, indem der Bürstenkopf mit Löchern versehen wird, in denen jeweils ein Borstenbündel mittels Metallblättchen, Metalldraht od. dgl. befestigt wird. Dabei haben sich für die Borsten insbesondere Polyamid-Kunststoffe, z. B. Polyamid 6.12 bewährt, da dieser Werkstoff hinsichtlich Härte, Wiederaufrichtvermögen und Regenerierbarkeit den an eine gute Zahnbürste gestellten Anforderungen am ehesten genügt. Dieser Werkstoff hat eine relativ geringe Wasseraufnahmefähigkeit, so daß die Zahnbürste schnell abtrocknet. Dies wiederum ist von Bedeutung, weil eine trockene Borste die Gebrauchseigenschaften hinsichtlich Steifheit, Wiederaufrichtungsvermögen etc. besser erfüllt als eine feuchte Borste. Dennoch trocknet eine Zahnbürste bei üblichen Benutzungsintervallen von ca. 12 Stunden nicht oder nur mangelhaft ab, wobei sich die Feuchtigkeit insbesondere im Befestigungsbereich der Borsten im Bürstenkopf länger hält. Dieser Mangel stellt sich um so eher ein, je enger die Borsten stehen und je größer die Anzahl der Borsten pro Flächeneinheit ist. Da aber der Reinigungs- und Massageeffekt mit der Borstenzahl pro Flächeneinheit steigt, wird diese wünschenswerte Steigerung der Gebrauchseigenschaft stets mit dem nachteiligen Effekt der langsameren Abtrocknung erkauft.

Die längere Feuchtigkeitshaltung hat bei Zahnbürsten den weiteren nachteiligen Effekt, daß die sich ohnehin vornehmlich im Befestigungsbereich zwischen Borsten und Borstenkopf sammelnden Bakterien ein günstiges Populationsklima vorfinden und damit zu einem hygienischen Problem führen, dem gerade bei der hier erfolgenden Anwendung im oralen Bereich besondere Bedeutung zukommt, ohne daß ihm bisher das notwendige Maß an Aufmerksamkeit geschenkt worden ist.

Diese Nachteile können dadurch vermieden werden, daß in bekannter Weise (US-A-39 10 637, DE-A-2 849 278, GB-A-2 016 917) Körper und Borsten aus dem gleichen Kunststoff bestehen und miteinander verschweißt sind, so daß der Bürstenkopf frei von Hohlräumen ist. Es sind folglich keine Löcher mehr vorhanden, in denen sich Reste von Zahnpflegemitteln und sonstiger Schmutz festsetzen können und sich das Wasser bzw. die Feuchtigkeit durch Kapillarwirkung besonders lange hält. Ferner wird durch die schnellere Abtrocknung im Wurzelbereich der Borsten dieser für die Stabilität und damit für die Gebrauchseigenschaften maßgebliche Bereich auch schneller in seinen ursprünglichen Zustand versetzt. Diese Ausbildung ist auch nicht mehr an ein bündelweises Besetzen des Bürstenkopfs und auch nicht an die Anordnung von Löchern gebunden, so daß im Bedarfsfall weit mehr Borsten auf gleicher Fläche untergebracht und die Borsten auch in beliebiger geometrischer Konfiguration angeordnet werden können.

Es ist weiterhin bekannt (DE-C-815 034) Borsten aus beliebigem Werkstoff zu Bündeln oder Paketen zusammenzufassen und an ihrer Befestigungsseite in dem durch Spritzgießen hergestellten Körper aus Kunststoff anläßlich des Spritzgießens einzubetten. Dabei können an einer einzigen Bürste auch Borstenfelder verschiedener Konfiguration vorgesehen werden. Das Einspritzen der Borsten hat jedoch den Nachteil, daß die Borsten innerhalb der Bündel oder Pakete sehr eng zusammengepreßt und in diesem Zustand im Spritzgußwerkzeug gehalten werden müssen. Gleichwohl läßt sich nicht vermeiden, daß Spritzgußmasse zwischen den Borsten und am Rand der Bündel oder Pakete aufsteigt, wodurch die Biegefähigkeit der Borsten beeinträchtigt wird und insbesondere über die gesamte Besatzfläche unterschiedlich sein kann. Auch bilden sich hierdurch wiederum Hohlräume mit den zuvor beschriebenen Nachteilen und schließlich können die harten Kunststoffgrate bei Zahnbürsten zu Verletzungen im Mundraum führen.

Der Erfindung liegt die Aufgabe zugrunde, eine Zahnbürste zu schaffen, deren Borstenbesatz bei der Zahnpflege unterschiedliche Wirkungen zu erzielen gestattet und der bei Gebrauch unterschiedlichen Abnutzung Rechnung trägt.

Diese Aufgabe wird erfindungsgemäß dadurch gelöst, daß einzeln stehende Borsten flächiger Anordnung und bündelweise zusammengefaßte Borsten miteinander kombiniert sind und daß die einzeln stehenden Borsten auf Teilflächen unterschiedlicher Kontur und/oder unterschiedlicher Verteilung angeordnet sind.

Durch die erfindungsgemäße Ausbildung ist es möglich, den Borstenbesatz an die verschiedenen Reinigungszwecke (Zahnflächen, Interdentalräume) einer Zahnbürste anzupassen. Auch können die bereichsweise unterschiedliche Abnutzung bzw. sonstiger Verschleiß und bleibende Verformungen einzelner Borsten durch geeignete Anordnung der flächig und bündelweise angeordneten Borsten kompensiert werden.

Als besonders vorteilhaft hat sich eine Ausbildung erwiesen, bei der die Borsten im griffnernen Kopfbereich des Bürstenkopfs einzeln stehend und flächig, im Randbereich einzeln stehend und streifenförmig und im übrigen Bereich des Bürstenkopfs nach Art von Bündeln zusammengefaßt angeordnet sind.

Es ist zwar möglich, an der Borsten-Aufnahmeseite des Bürstenkopfs Bohrungen vorzusehen, in die einzelne Borstenbündel eingeschweißt werden, wobei dann aber Bürstenkopf und Borstenbündel an den einander zugekehrten Seiten so weit aufgeschmolzen werden sollten, daß die Löcher nach Einsetzen der Borstenbündel vollständig verschlossen werden. Vorzugsweise ist jedoch die Borsten-Aufnahmeseite des Bürstenkopfs eben ausgebildet und sind die Borsten stumpf aufgeschweißt.

Gemäß einer weiteren bevorzugten Ausführungsform sind die Borsten durch berührungsloses Erhitzen auf den Bürstenkopf aufgeschweißt. Das berührungslose Erhitzen ist bei Polyamid und anderen Kunststoffen vorteilhaft, um eine einwandfreie Schweißverbindung zu erhalten und das Verfärben, Oxydieren und die Fadenbildung aus der Schmelze zu vermeiden. Ferner werden durch diese Verbindung die Auszugskräfte für die Borsten erhöht, so daß weder bei der Nachbearbeitung der freien Borstenenden zum Zwecke des Abrundens noch beim späteren Gebrauch die Gefahr des Ausreißens besteht.

Als besonders vorteilhafte Werkstoffe haben sich Polyamid 6.12 oder Polyester erwiesen, auch wenn die Erfindung auf diese speziellen Kunststoffe nicht beschränkt ist. Wesentlich ist nur, daß sie die für eine Zahnbürste notwendigen Gebrauchseigenschaften besitzen.

Die erfindungsgemäße Ausbildung ermöglicht es ferner, daß der Bürstenkopf eine Dicke von nur 2 bis 4 mm gegenüber bisher 5 bis 6 mm aufweist, so daß einerseits der Materialeinsatz im Bereich des Bürstenkopfs geringer ist, andererseits der Differenzbetrag in der Dicke des Bürstenkopfs gegebenenfalls der Borstenlänge zugeschlagen werden kann, so daß wiederum eine Vergrößerung der Variationsbreite hinsichtlich der Gebrauchseigenschaften möglich ist. Statt dessen kann die niedrigere Bauhöhe aber auch einem besonderen Benutzerkreis zugute kommen, der wegen engen Mund- und/oder Rachenraums, Schädigung der Kiefergelenke oder sonstiger Celebral-Schädigungen herkömmliche Zahnbürsten nicht oder nur mangelhaft einsetzen kann.

Die Erfindung eröffnet weiterhin die Möglichkeit, am Bürstenkopf mehr als 3 000 und zwar bis zu 10 000 Borsten zu befestigen, während herkömmliche Zahnbürsten bis zu 2 000 Borsten, Spezialbürsten bis zu 3 000 Borsten aufweisen. Diese größere Anzahl von Borsten pro Flächeneinheit ist deshalb möglich, weil bei der erfindungsgemäßen Ausbildung nicht auf einen bestimmten Minimalabstand zwischen einzelnen Löchern und auch nicht auf eine mechanische Verankerung der Borsten Rücksicht genommen werden muß, die Borsten vielmehr dicht an dicht gesetzt werden können. Umgekehrt läßt sich bei gleicher Borstenzahl die Abmessung des Bürstenkopfs erheblich verkleinern, so daß Zahnbürsten für Kleinkinder oder den oben genannten Benutzerkreis erhalten werden, die zumindest gleich gute Pflege- und Massagewirkung haben wie herkömmliche Erwachsenen-Zahnbürsten.

Nachstehend ist die Erfindung anhand von Ausführungsbeispielen beschrieben, die in der Zeichnung wiedergegeben sind. In der Zeichnung zeigen :

Figur 1 eine schematische Darstellung des Verfahrensablaufs beim Aufschweißen der Borsten auf den Bürstenkopf ;

Figur 2 eine teilweise geschnittene Längsansicht einer Ausführungsform der fertigen Zahnbürste ;

Figur 3 eine vergrößerte Detailansicht eines Borstenbündels in herkömmlicher Ausbildung ;

Figur 4 eine vergrößerte Detailansicht eines Borstenbündels in erfindungsgemäßer Ausbildung und

Figur 5 eine Ansicht auf den Borstenbesatz einer Zahnbürste unter Wiedergabe der Variationsbreite.

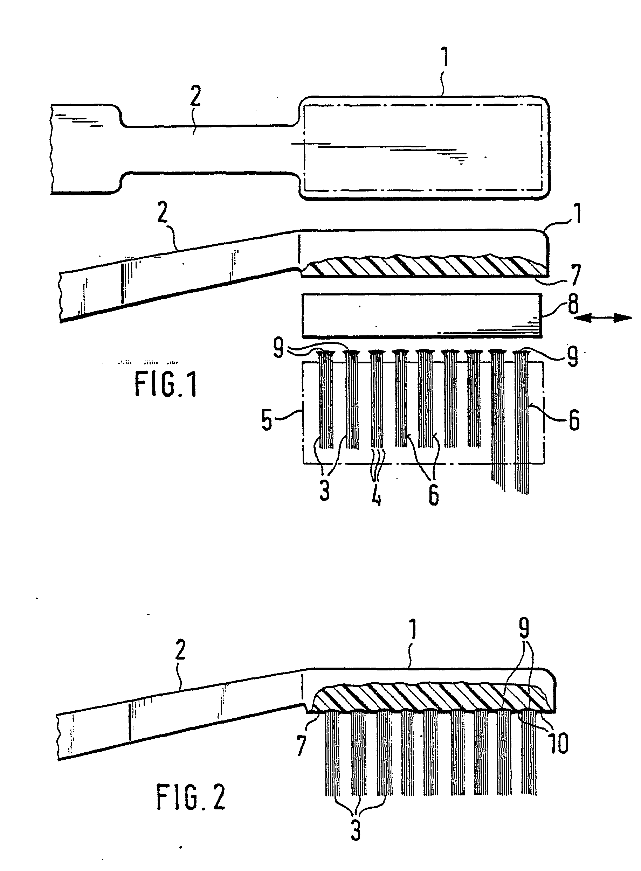

In Figur 1 ist schematisch eine Vorrichtung zur Herstellung einer Zahnbürste wiedergegeben. Figur 1 läßt den Griff 2 mit dem im wesentlichen rechteckigen Bürstenkopf 1 in Draufsicht und Seitenansicht erkennen. Der Bürstenkopf 1 und der Stiel 2 bestehen aus Kunststoff, z. B. aus Polyamid und sind in einer nicht gezeigten Aufnahme gehalten. Mit Abstand davon sind in einem Träger 5 mehrere Aufnahmen 6 für je ein aus einer Vielzahl von Borsten 4, z. B. aus Polyamid bestehendes Bündel 3 angeordnet. Jedes Borstenbündel 3 kann bereits auf Wunschmaß zugeschnitten in den Träger 5 eingesetzt oder als Endlosstrang (Figur 1 rechts) in den Träger 5 hineingeführt sein. Beim gezeigten Ausführungsbeispiel erfolgt die Erwärmung der Aufnahmeseite 7 des Bürstenkopfs 1 sowie der Enden der Borstenbündel 3 mittels eines plattenförmigen Heizelementes 8, das zwischen dem Bürstenkopf 1 und den freien Enden der Borstenbündel 3 angeordnet ist. Das Heizelement 8 ist in Richtung des rechts wiedergegebenen Doppelpfeils beweglich, kann also in den Raum zwischen Bürstenkopf 1 und Borstenbündel 3 hineingebracht und nach dem Aufschmelzen der Enden der Borstenbündel 3 und der Aufnahmeseite 7 des Bürstenkopfs 1 wieder zurückgezogen werden, um Bürstenkopf und Borstenenden zusammenführen zu können. In Figur 1 ist die Schmelzzone an der Borsten-Aufnahmeseite 7 schraffiert angedeutet.

Beim Erwärmen der Borsten durch Hereinfahren des Heizelementes 8 werden lediglich die freien Enden der Borsten 4 kontaktlos aufgeschmolzen, wobei sie untereinander verschmelzen und einen abgerundeten, linsenförmigen Kopf 9 bilden. In dieser Form werden die Borstenbündel 3 und der Bürstenkopf 1 zusammengebracht und die verdickten Enden 9 unter Druck an die aufgeschmolzene Aufnahmeseite 7 des Borstenträgers angedrückt, bis sie die in Figur 2 gezeigte Position einnehmen, wobei sich um jedes Borstenbündel eine schwache ringförmige Erhöhung 10 bildet. Bei Verwendung von endlosen Bürstensträngen wird der Strang nach dem Fügevorgang abgelängt. Statt der gezeigten Zuführung der Borsten 4 nach Art von Bündeln 3 können auch größere oder kleinere Gruppen von Borsten 4 in beliebiger Konfiguration zugeführt werden.

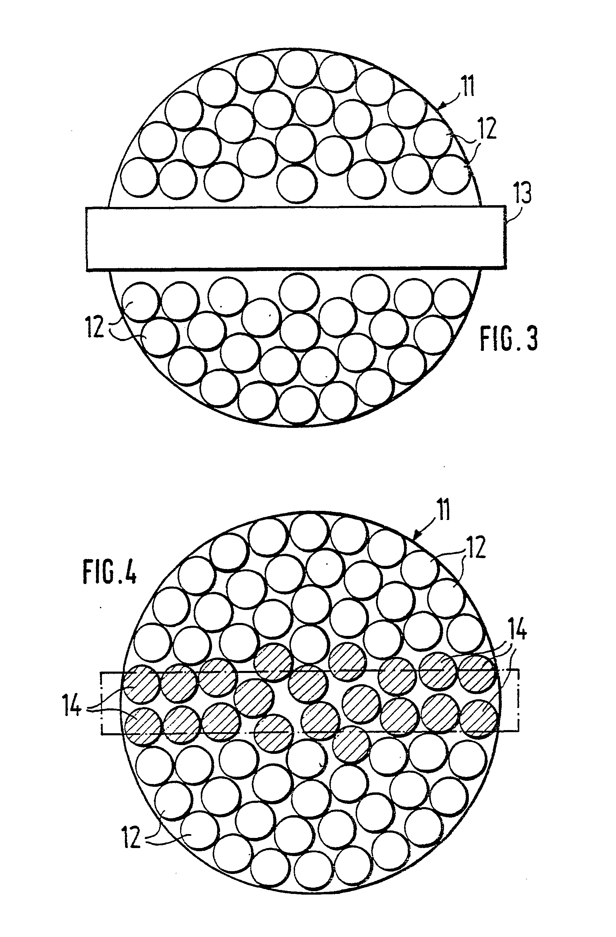

Figur 3 zeigt ein einzelnes Borstenbündel 11 in herkömmlicher Anordnung, dessen Borsten 12 mittels eines Metalldrahtes 13 in einem Loch des Bürstenkopfs verankert sind. Figur 4 läßt erkennen, daß bei gleicher bündelartiger Anordnung auf der gleichen Fläche die gestrichelt wiedergegebenen Borsten 14 zusätzlich untergebracht werden können, wenn die Borsten angeschweißt werden.

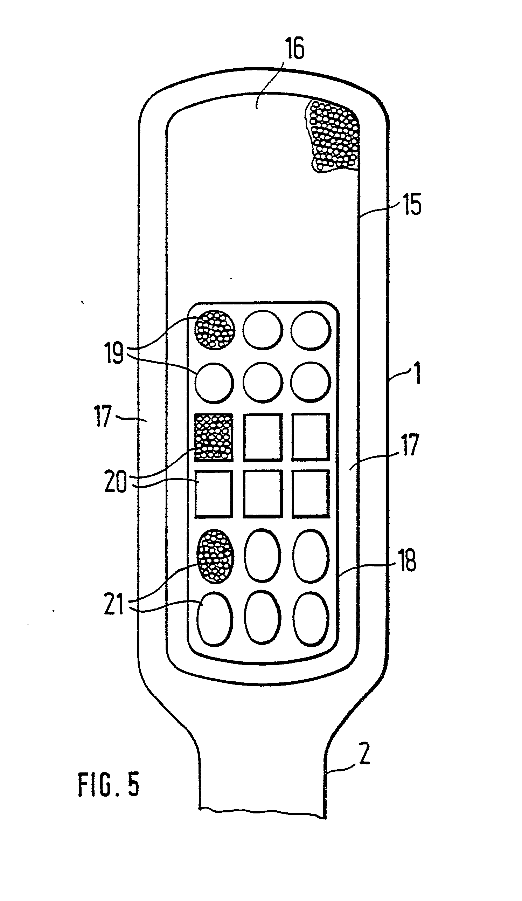

In Figur 5 sind einige mögliche Konfigurationen der Anordnung der Borsten gezeigt. Der Bürstenkopf 1 weist die mit der Linie 15 umgrenzte Besatzfläche auf. Auf dieser sind in dem dem Griff 2 fernen Bereich 16 die Borsten 16 einzel stehend dicht an dicht, also flächendeckend angeschweißt. Eine gleiche flächendeckende, jedoch streifenförmige Anordnung ist in den Randbereichen 17 der Besatzfläche vorgesehen. Hingegen sind im mittleren Bereich, der durch die Linie 18 abgegrenzt ist, die Borsten nach Art von Bündeln 19, 20 und 21 zusammengefaßt, wobei die vorderen Bündel 19 Kreisform, die mittleren Bündel 20 Rechteckform und die griffnahen hintere Bündel Ovalform haben.

## Patentansprüche

1. Zahnbürste mit einem einen Bürstenkopf und einen Griff bildenden Körper aus Kunststoff und am Bürstenkopf durch Schweißen befestigten Borsten aus dem gleichen Kunststoff, dadurch gekennzeichnet, daß einzeln stehende Borsten flächiger Anordnung und bündelweise (19, 20, 21) zusammengefaßte Borsten miteinander kombiniert sind und daß die einzeln stehenden Borsten auf Teilflächen (16, 17) unterschiedlicher Kontur und/oder unterschiedlicher Verteilung angeordnet sind.

2. Zahnbürste nach Anspruch 1, dadurch gekennzeichnet, daß die Borsten im griffernen Kopfbereich (16) des Bürstenkopfs (1) einzeln stehend und flächig, im Randbereich (17) einzeln stehend und streifenförmig und im übrigen Bereich (18) des Bürstenkopfs nach Art von Bündeln (19, 20, 21) zusammengefaßt angeordnet sind.

3. Zahnbürste nach Anspruch 1 oder 2, dadurch gekennzeichnet, daß die Borsten-Aufnahmeseite (7) des Bürstenkopfs (1) eben ausgebildet ist und die Borsten (4) stumpf aufgeschweißt sind.

4. Zahnbürste nach einem der Ansprüche 1 bis 3, dadurch gekennzeichnet, daß die Borsten (4) durch berührungsloses Erhitzen an dem Bürstenkopf (1) angeschweißt sind.

5. Zahnbürste nach einem der Ansprüche 1 bis 4, dadurch gekennzeichnet, daß der Bürstenkopf (1) und die Borsten (4) aus Polyester oder Polyamid, vorzugsweise aus Polyamid 6.12, bestehen.

6. Zahnbürste nach einem der Ansprüche 1 bis 5, dadurch gekennzeichnet, daß der Bürstenkopf (1) eine Dicke von 2 bis 4 mm aufweist.

7. Zahnbürste nach einem der Ansprüche 1 bis 6, dadurch gekennzeichnet, daß am Bürstenkopf (1) mehr als 3 000 Borsten (4) befestigt sind.

## Claims

1. Toothbrush with a brush head and a plastic body forming a handle and bristles made from the same plastic fixed to the brush head by welding, characterized in that individual standing bristles in a flat arrangement and bristles combined into bundles (19, 20, 21) are combined with one another and that the individual standing bristles are arranged on partial surfaces (16, 17) having a different contour and/or different distribution.

2. Toothbrush according to claim 1, characterized in that the bristles are in individual standing and flat form in the handle-remote head region (16) of the brush head (1), are individual standing and strip-like in the marginal region (17) and are combined in the form of bundles (19, 20, 21) in the remaining area (18) of the brush head.

3. Toothbrush according to claims 1 or 2, characterized in that the bristle reception side (7) of brush head (1) is planar and the bristles (4) are butt welded on.

4. Toothbrush according to one of the claims 1 to 3, characterized in that the bristles (14) are welded to the brush head (1) by contactless heating.

5. Toothbrush according to one of the claims 1 to 4, characterized in that the brush head (1) and bristles (4) are made from polyester or polyamide, preferably polyamide 6.12.

6. Toothbrush according to one of the claims 1 to 5, characterized in that the brush head (1) has a thickness of 2 to 4 mm.

7. Toothbrush according to one of the claims 1 to 6, characterized in that more than 3 000 bristles (4) are fixed to the brush head (1).

## Revendications

1. Brosse à dents comprenant un corps en matière plastique formant une tête de brosse et un manche, et des poils de la même matière plastique fixés à la tête de brosse par soudage, caractérisée en ce que des poils isolés disposés selon une surface et des poils réunis en faisceaux (19, 20, 21) sont combinés entre eux et que les poils isolés sont disposés sur des surfaces partielles (16, 17) de contour différent et/ou de répartition différente.

2. Brosse à dents selon la revendication 1, caractérisée en ce que les poils sont disposés isolés et selon une surface dans la région (16) de la tête de brosse (1) éloignée du manche, isolés et sous forme de bandes dans la région marginale (17) et rassemblés à la manière de faisceaux (19, 20, 21) dans la région restante (18) de la tête de brosse.

3. Brosse à dents selon l'une des revendications 1 et 2, caractérisée en ce que la face de réception des poils (7) de la tête de brosse (1) a une configuration plane et que les poils (4) sont soudés en bout.

4. Brosse à dents selon l'une des revendications 1 à 3, caractérisée en ce que les poils (4) sont soudés à la tête de brosse (1) par chauffage sans contact.

5. Brosse à dents selon l'une des revendications 1 à 4, caractérisée en ce que la tête de brosse (1) et les poils (4) sont en polyester ou en polyamide, de préférence en polyamide 6.12.

6. Brosse à dents selon l'une des revendications 1 à 5, caractérisée en ce que la tête de brosse (1) présente une épaisseur de 2 à 4 mm.

7. Brosse à dents selon l'une des revendications 1 à 6, caractérisée en ce que plus de 3 000 poils (4) sont fixés à la tête de brosse (1).

FIG.1

FIG.2

FIG.3

FIG.4

FIG. 5